# EUROPEAN PATENT SPECIFICATION

(11) **EP 0 297 561 B1**
(45) Date of publication and mention of the grant of the patent: **01.09.1993**
(21) Application number: 88110408.7
(22) Date of filing: 29.06.1988
(51) Int. Cl.: A21B 3/13

(54) **Method for the manufacture of a square baking pan for use in automatic breadmaking machine**
Verfahren zur Herstellung eines quadratischen Backblechs zum Gebrauch in einer automatischen Vorrichtung zur Herstellung von Brot
Procédé de fabrication d'un moule carré pour l'utilisation dans un appareil de production de pain automatique

(30) Priority: 30.06.1987 JP 164636/87
(43) Date of publication of application: 04.01.1989
(73) Proprietor: SUMITOMO ELECTRIC INDUSTRIES LIMITED, Osaka-shi, Osaka 541 (JP)
(72) Inventor: Matsuyama, Fumio Kumatori Works of Sumitomo, Kumatori-cho Sennan-gun Osaka (JP); Matsushita, Nobutaka Kumatori Works of Sumitomo, Kumatori-cho Sennan-gun Osaka (JP)
(74) Representative: Grünecker, Kinkeldey, Stockmair & Schwanhäusser Anwaltssozietät

(56) References cited:
- GB-A- 2 075 824
- US-A- 4 009 859
- US-A- 4 223 619
- US-A- 4 452 419

## Description

### BACKGROUND OF THE INVENTION

The present invention relates to a method for the manufacture of a baking pan for use in an automatic breadmaking machine.

Automatic breadmaking machines enable breadmaking at home with great convenience and have recently gained rapid acceptance by consumers. An important part of an automatic breadmaking machine is a baking pan (sometimes referred to as a bread case or hopper), which is a container in which ingredients including wheat flour, yeast, sugar and salt are mixed, kneaded, fermented and baked. The inner surface of this container is usually coated with a fluorine resin in order to ensure that the mixture of ingredients can be kneaded while preventing the dough from sticking to the inner surface of the pan and so that the finished bread can be readily depanned after baking. The fluorine resin coating is most commonly made of polytetrafluoroethylene (PTFE) resins having a very high heat resistance. PTFE resins withstand cyclic use at temperatures of up to 260°C and hence have satisfactory resistance to baking operations, which are usually performed at 240 - 250°C.

Conventional baking pans are fabricated by one of the two following typical methods: In accordance with the first method, a container is first made from am aluminum casting having a wall thickness of 2 - 3 mm and a coating of PTFE resin applied to the inner surfaces of the container is fired to make a pan having a square cross section with a length of 120 - 130 mm on each side and which is about 130 mm deep. In the second method, an aluminum or aluminum alloy plate which is preliminarily coated with a fluorine resin is press-formed into the final shape of a container, which has a round cross section with a diameter of 130 mm and which about 130 mm deep.

On the other hand, attempts to make square containers by press forming of fluoride resin coated plates are very few, and they have been directed to the making of the inner kettle of a rice cooking jar that has a relatively small depth in comparison with the dimensions of its cross section.

The conventional baking pans have various problems. Those of the first type, which are containers that are cast from aluminum and which are thereafter coated with a fluorine resin on their inner surface, have the disadvantage that because of their large wall thickness, it takes an undesirably long time to cool the bread after baking. The pans of the second type, which are fabricated by shaping aluminum plates after they are coated with a fluorine resin, offers an economic advantage in that their wall thickness can be decreased to as small as above 0.8 - 1.0 mm. However, the cross-sectional shape that can be attained is circular, which is not completely satisfactory as the shape of bread.

Cases are known in which the fluorine resin coated plate is shaped into a square container having a relatively shallow depth as compared with its cross-sectional dimensions, but the bread baked in this container is flat and unsatisfactory. If the fluorine resin coated plate is pressed into a configuration that has an adequate depth in comparison with the dimensions of its cross section, not only will wrinkles develop on the side wall but also pinholes occur in the fluorine resin coating. Furthermore, the adhesion between the fluorine resin coating and the aluminum substrate will decrease, causing various problems.

### SUMMARY OF THE INVENTION

An object, therefore, of the present invention is to provide a method for the manufacture of a baking pan for use in an automatic breadmaking machine.

The present inventors found that in order to attain a square shape ideal for baking pans, both the elongation of the fluorine resin coated aluminum or aluminum alloy plate and that of the fluorine resin coating must satisfy certain requirements. The present inventors have solved the problems of the prior art on the basis on this finding.

Specifically, the baking pan is fabricated by press forming a resin coated, aluminum or aluminum alloy pan into a square shape wherein the radius of each of the corners of the pan is in a range of 15 - 55 mm, and the pan has a ratio of B to A in a range of 0.5 - 1.5, where A is the distance between opposite interior angles in the opening of the pan and B is the depth of the pan. The fluorine resin coated aluminum or aluminum alloy plate has an elongation of at least 25% and the fluorine resin coating has an elongation of at least 350%.

### BRIEF DESCRIPTION OF THE DRAWINGS

Fig. 1 is a plan view of a square baking pan of the present invention; and
Fig. 2 is a cross section of the baking pan taken on a line vertical to its bottom.

### DESCRIPTION OF THE PREFERRED EMBODIMENTS

Preferred embodiments of the present invention will now be described with reference to the accompanying drawings.

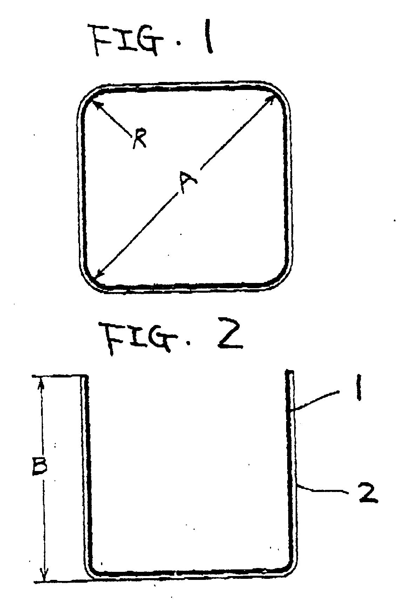

A square baking pan manufactured according to the method of the invention has the shape shown in Fig. 1 (plan view) and Fig. 2 (cross-sectional view taken perpendicularly to the bottom of the pan). In accordance with the present invention, an aluminum or aluminum alloy plate 2 having a fluorine resin coat 1 is praised into a square shape. The ideal square shape of a baking pan is such that each of the corners to the pan has a radius of 15 - 55 mm and that a ratio of B to A is in the range of 0.5 - 1.5, where A is the distance between opposite interior angles of the opening in the transverse section of the pan and B is the depth of the pan. If the radius of each corner of the pan is smaller than 15 mm, extreme difficulty will be involved in press forming. If the radius of each corner exceeds 55 mm, the bread baked in the resulting pan will have a substantially round shape which is not satisfactory for the shape of bread. If B/A is smaller than 0.5, the bread baked in the pan will have a flat shape. If B/A exceeds 1.5, difficulty is encountered in press forming.

The biggest problems associated with press forming a fluorine resin coated plate having the shape defined above are: (1) cracking that might occur in the plate itself, and (2) blushing of the resin surface on the side wall of the container subjected to the greatest elongation during press forming. In order to prevent these problems, the fluorine resin coated plate and the fluorine resin are required to have elongations of at least 25% and 350%, respectively. If the elongation of the fluorine resin coated plate is smaller than 25%, it is prone to cracking during press forming. If the elongation of the fluorine resin is smaller than 350%, blushing will occur on the resin surface in the side wall of the formed container. This "blushing " phenomenon is believed to be a sign of the porous state of the fluorine resin coating or partial separation occurring at the interface between the aluminum or aluminum alloy plate and the fluorine resin coating. Therefore, if a "blushing" baking pan is used to bake bread, not only staining but also delamination of the fluorine resin coating will occur and the pan becomes no longer usable within a short period of time.

The elongation of the fluorine resin coated aluminum or aluminum alloy plate is measured by a method for determining the elongation of aluminum plates described in JIS 2241. The elongation of the fluorine resin refers to the elongation of the fluorine resin coating and is measured by dissolving the aluminum substrate of the fluorine resin coated aluminum plate with a suitable chemical such as HCl and measuring the elongation of the separation fluorine resin layer.

A typical method for fabricating the baking pan of the present invention is described hereinafter.

First, a fluorine resin coated plate is best prepared by the following method: One surface of an aluminum plate is etched either electrochemically or chemically to produce fine asperities on that surface. A dispersion of fluorine resin is then applied to the etched surface and fired to form a coating of the fluorine resin. In order to attain an elongation of at least 25%, the aluminum substrate of the fluorine resin coated plate is preferably made of one of the aluminum alloys described in JIS (Japanese Industrial Standards) 1050, 1100 and 3003, or the Mg-Mn system alloy described in JIS 3004 which contains up to 0.8% Mg and up to 1.1% Mn. In order to attain an elongation of at least 350% for the fluorine resin, it is preferred that the applied resin coating be fired at 380 - 450°C if the resin is PTFE and the resin layer deposited on the high spots of the etched surface of the substrate preferably has a thickness of at least 10 µm. It is also preferred that the resin coating have a minimum loading of fillers such as pigments. The baking pan of the present invention can be fabricated by press forming the above-described fluorine resin coated plate into a square shape.

Two examples of the present invention are described below.

### Example 1

Aluminum plates 1.0 mm thick (for their compositions, see Table 1) were finely grained on one surface by electrochemical etching (20 coulombs/cm²) in an aqueous NaCl solution with the aluminum plates being used as anodes. A dispersion of PTFE resin (type D-1F made by Daikin Kogyo Co., Ltd.) was applied to the etched surface of each aluminum plate and fired at 400°C for 10 minutes. The elongation of each sample with a fluorine resin coating was measured by the method described in JIS 2241. Part of each sample was treated with HCl to dissolve away the aluminum substrate, and then the elongation of the residual resin layer was measured. A disk having a diameter of 340 mm was stamped out from each sample and press formed into a square baking pan. The radius of each corner of the opening of the pan was 35 mm; the opening was 130 mm long on each side; the distance between opposite interior angles of the opening in transverse section was 184 mm; and the depth of the pan was 130 mm. The results of checking as to whether cracking occurred during the press forming are summarized in Table 1.

**TABLE 1**

| Aluminum type | Principal alloying elements | | | | Elongation of PTFE coated plate (%) | Elongation of PTFE (%) | Cracking |
|---|---|---|---|---|---|---|---|
| | Si | Fe | Mn | Mg | | | |
| JIS 1100 | 0.10 | 0.50 | 0.05 | 0.01 | 30 | 420 | O |
| JIS 3003 | 0.55 | 0.52 | 1.13 | 0.01 | 27 | 380 | O |
| Specialty | 0.12 | 0.60 | 0.96 | 0.76 | 25 | 390 | O |
| JIS 5052 | 0.09 | 0.25 | 0.04 | 2.17 | 22 | 400 | X |
| Notes: O, no cracking; X, cracked. | | | | | | | |

### Example 2

Samples of the specialty aluminum plate noted in Table 1 in Example 1 (ASB plate produced by Kobe Steel, Ltd.) were treated as in Example 1 to prepare PTFE coated plates, except that the applied PTFE coating was fired under various conditions as shown in Table 2. The elongation of the thus-fired resin coatings was measured, and the results are shown in Table 2. All samples of the resin coated plate had an elongation of 26%. The elongation of the resin coatings was measured by dissolving the aluminum substrate and punching out the residual PTFE coating to produce a strip 10 mm wide and 200 mm long, which was stretched between chucks 30 mm apart at a tensile speed of 45 mm/min until it broke, and the elongation at the time when breaking occurred was measured.

The adhesion between the aluminum substrate and the resin coating was measured by a cross cut-peel test which was conducted in the following manner: A grid pattern of 100 squares that 1 mm long on each side were cut through the resing coating into the aluminum substrate with a blade tool, and an adhesive tape was applied over the cross-hatched area and quickly pulled off. The number of squares that were not pulled off and in which the resin remained intact was counted.

In the next instance, the coated samples were press-formed into a square container as in Example 1. The adhesion between the aluminum substrate and the resin coating in the side wall of the container where the coated plate had been most stretched was measured by the same method as described above. Visual inspection was carried out in order to determine whether blushing had occurred in the resin coating on the side wall of the container. The results are summarized in Table 2.

**TABLE 2**

| Firing temp. (°C) | Time (min.) | Elongation of PTFE (%) | Adhesion of PTFE coating | Adhesion of PTFE coating after press forming | Blushing after press forming |
|---|---|---|---|---|---|
| 350 | 10 | 280 | 100/100 | 40/100 | X |
| 380 | 10 | 360 | 100/100 | 100/100 | O |
| 400 | 10 | 390 | 100/100 | 100/100 | O |
| 420 | 10 | 430 | 100/100 | 100/100 | O |
| 450 | 10 | 400 | 100/100 | 100/100 | O |
| Notes: O, no blushing occurred; X, blushing occurred. | | | | | |

Table 2 shows that the adhesion of the PTFE resin having an elongation of less than 350% dropped after press forming.

As will be apparent from the foregoing description, the present invention provides a baking pan having a square cross section which is ideal as the shape of a baking pan. The pan is highly suitable for use in an automatic breadmaking machine.

## Claims

1. A method for the manufacture of a baking pan for use in an automatic bread making machine comprising the steps of:
coating an aluminium or aluminium alloy plate with fluorine resin and press-forming the fluorine resin coated aluminium or aluminium alloy plate into the desired shape, **characterized by**
etching the surface of said alloy plate to produce fine asperities on said surface, applying a dispersion of fluorine resin to said etched surface with fine asperities;
wherein the fluorine resin coated aluminium or aluminium alloy plate has an elongation of at least 25%;
firing said coated plate at temperature sufficient for obtaining a fluorine resin elongation of at least 350%;
pressing said plate into a square shape, wherein, each of the corners of the pan have a radius of 15 to 55 mm and a ratio of B to A in a range of 0.5 to 1.5, wherein A is the distance between opposite interior angles of the opening in transverse section of said pan and B is the depth of said pan.

2. Method according to claim 1, wherein said fluorine resin is PTFE, and said step of firing is carried out at a temperature in a range of 380-450°C.

3. Method according to claim 1, wherein the resin coating has a thickness of at least 10 µm on high spots of the etched surface.

4. Method according to claim 1, wherein said step of etching comprises electrochemical etching.

5. Method according to claim 1, wherein said step of etching comprises chemical etching.

## Patentansprüche

1. Verfahren zur Herstellung einer Backpfanne zur Verwendung in einer automatischen Vorrichtung zur Herstellung von Brot, umfassend die folgenden Schritte:
Beschichten einer Aluminium- oder Aluminiumlegierungsplatte mit Fluorharz und Preßformen der fluorharzbeschichteten Aluminium- oder Aluminiumlegierungsplatte in die gewünschte Form,
**gekennzeichnet** durch
Ätzen der Oberfläche dieser Legierungsplatte, um feine Oberflächenunebenheiten auf dieser Oberfläche zu erzeugen,
Auftragen einer Aufschlämmung aus Fluorharz auf diese geätzte Oberfläche mit feinen Oberflächenunebenheiten;
wobei die fluorharzbeschichtete Aluminium- oder Aluminiumlegierungsplatte eine Dehnung von wenigstens 25 % aufweist;
Brennen dieser beschichteten Platte bei einer Temperatur, welche ausreichend ist, eine Fluorharzdehnung von wenigstens 350 % zu erzielen;
Pressen dieser Platte in eine quadratische Form, wobei jede der Ecken dieser Pfanne einen Radius von 15 - 55 mm aufweist und ein Verhältnis von B:A in einem Bereich von 0,5 - 1,5 liegt, wobei A die Distanz zwischen den gegenüberliegenden inneren Winkeln der Öffnung in dem diagonalen Bereich der Pfanne ist und B die Tiefe dieser Pfanne.

2. Verfahren nach Anspruch 1, wobei dieses Fluorharz PTFE ist und wobei dieser Schritt des Brennens bei einer Temperatur in einem Bereich von 380 - 450 °C ausgeführt wird.

3. Verfahren nach Anspruch 1, wobei die Harzbeschichtung eine Dicke von wenigstens 10 µm auf den höchsten Punkten der geätzten Oberfläche aufweist.

4. Verfahren nach Anspruch 1, wobei dieser Schritt des Ätzens elektrochemisches Ätzen umfaßt.

5. Verfahren nach Anspruch 1, wobei dieser Schritt des Ätzens chemisches Ätzen umfaßt.

## Revendications

1. Procédé de fabrication d'un moule de cuisson à utiliser dans une machine automatique à faire le pain, comprenant les étapes de :
revêtement d'une plaque en aluminium ou alliage d'aluminium d'une résine fluorée et formage à la presse de la plaque en aluminium ou alliage d'aluminium revêtue de la résine fluorée à la forme désirée, caractérisé par les opérations consistant à :
attaquer la surface de ladite plaque d'alliage pour produire de fines aspérités sur la surface,
appliquer une dispersion de résine fluorée sur ladite surface attaquée dotée de fines aspérités,
la plaque en aluminium ou alliage d'aluminium revêtue de résine fluorée ayant un allongement d'au moins 25 %;
chauffer ladite plaque revêtue à une température suffisante pour obtenir un allongement du résine fluorée d'au moins 350 % ;
façonner ladite plaque en une forme carrée, chacun des coins du moule ayant un rayon de 15 à 55 mm et un rapport de B à A compris dans la plage de 0,5 à 1,5, A étant la distance entre les angles internes opposés de l'ouverture dans la section transversale dudit moule et B étant la profondeur dudit moule.

2. Procédé selon la revendication 1, dans lequel ladite résine fluorée est PTFE et ladite étape de chauffage est menée à une température comprise dans la plage de 380 à 450°C.

3. Procédé selon la revendication 1, dans lequel le revêtement de résine a une épaisseur d'au moins 10 µm sur les points élevés de la surface attaquée.

4. Procédé selon la revendication 1, dans lequel ladite étape d'attaque comprend une attaque électrochimique.

5. Procédé selon la revendication 1, dans lequel ladite étape d'attaque comprend une attaque chimique.
